# EUROPÄISCHE PATENTSCHRIFT

(11) **EP 4 115 187 B1**
(45) Veröffentlichungstag und Bekanntmachung des Hinweises auf die Patenterteilung: **14.02.2024**
(21) Anmeldenummer: 21707951.6
(22) Anmeldetag: 23.02.2021
(51) Int. Cl.: G01P 3/36, G01P 13/04, G01P 3/80

(54) **VORRICHTUNG ZUM BESTIMMEN DER GESCHWINDIGKEIT UND/ODER DER LÄNGE EINES PRODUKTS**
DEVICE FOR DETERMINING THE SPEED AND/OR THE LENGTH OF A PRODUCT
DISPOSITIF DE DÉTERMINATION DE LA VITESSE ET/OU DE LA LONGUEUR D'UN PRODUIT

(30) Priorität: 02.03.2020 DE 102020105456
(43) Veröffentlichungstag der Anmeldung: 11.01.2023
(73) Patentinhaber: SIKORA AG, 28307 Bremen (DE)
(72) Erfinder: HOLLE, Armin, 28832 Achim (DE); KAYA, Tuncer, 28217 Bremen (DE)
(74) Vertreter: Hauck Patentanwaltspartnerschaft mbB
(86) Internationale Anmeldenummer: PCT/EP2021/054403
(87) Internationale Veröffentlichungsnummer: WO 2021/175653

(56) Entgegenhaltungen:
- EP-A1- 0 710 817
- EP-A1- 2 241 896
- DE-A1-102015 217 022
- JP-A- H08 146 020
- US-A- 4 616 931
- US-A1- 2004 145 749
- US-A1- 2013 001 401

## Beschreibung

Die Erfindung betrifft eine Vorrichtung zum Bestimmen der Geschwindigkeit und/oder der Länge eines entlang einer Förderrichtung bewegten Produkts, vorzugweise eines Strangs, umfassend einen Laser zum Bestrahlen einer Oberfläche des Produkts und umfassend eine Detektoreinrichtung zum Detektieren von von der Oberfläche des Produkts zurückgestreuter Laserstrahlung.

Beispielsweise bei der Herstellung von Rohren, zum Beispiel in Extrusionsvorrichtungen, besteht ein Bedarf für eine Längenmessung des hergestellten Strangs. Ein präzises Erfassen der Produktionslänge bietet Potenzial für zusätzliche Wertschöpfung. Aus dem Stand der Technik bekannt sind berührungslose optische Messverfahren. Diese bieten den Vorteil, dass sie nicht-invasiv und damit im Wesentlichen verschleißfrei arbeiten. Auch wird durch Vermeiden von Schlupf eine höhere Messgenauigkeit erreicht und es lässt sich eine breite Produktpalette vermessen. Den gängigsten optischen Längenmessverfahren ist gemein, dass die Länge indirekt über eine kontinuierliche Geschwindigkeitsmessung des Produkts gemessen wird.

Bekannt sind optische Ortsfiltermessvorrichtungen, bei denen ein durch Bestrahlung der Produktoberfläche erzeugtes optisches Muster über ein Transmissionsgitter durch einen Sensor detektiert wird. Eine Bewegung des Produkts und eine damit einhergehende Bewegung des optischen Musters wird durch den Sensor detektiert, im einfachsten Fall als einfache Intensitätsmodulation. Dieses Messverfahren zeichnet sich zwar durch eine große konstruktive und messtechnische Einfachheit aus. Es hat sich in der Praxis allerdings nicht durchgesetzt, unter anderem da es bei langsamen Geschwindigkeiten, (plötzlichem) Stillstand oder großen positiven oder negativen Beschleunigungen nicht immer zuverlässige Ergebnisse liefert. Auch kann keine Richtungsunterscheidung der Bewegungsrichtung des Produkts vorgenommen werden.

Bei anderen optischen Längenmessvorrichtungen wird die Produktoberfläche beispielsweise mit einer Leuchtdiode beleuchtet und die beleuchtete Oberfläche mit einem Objektiv auf einen bildgebenden Sensor, zum Beispiel einen CCD-Sensor, abgebildet. In diesem Fall dient die Oberflächenstruktur des Produkts selbst als optisches Muster. Die einzelnen Pixel können in der Datenaufnahme so gewichtet werden, dass die Wirkung eines Transmissionsgitters nachgeahmt wird. Ein Vorteil dieser Messvorrichtungen ist, dass aus einem Rohbild mehrere Signale gleichzeitig erzeugt werden können, zum Beispiel durch unterschiedliche Gittergewichtungen in der Auswertung. Auf diese Weise wird zum Beispiel eine Richtungssensitivität ermöglicht. Auch diese Messvorrichtungen haben sich in der Praxis allerdings nicht durchgesetzt. Dies liegt unter anderem an der begrenzten Bandbreite und räumlichen Auflösung der bildgebenden Sensoren und dadurch bedingten Limitierungen der Messgenauigkeit sowie dem messbaren Geschwindigkeitsbereich. Die Verwendung einer abbildenden Optik macht das System darüber hinaus unflexibel und anfällig gegen Abstandsschwankungen, wodurch die Schärfentiefe begrenzt wird. Die Ausrichtung des Messsystems ist von erheblichem Aufwand und aufgrund des Nutzens der Oberflächenstruktur des Produkts als optisches Muster treten Probleme bei sehr glatten Produktoberflächen auf.

Durchgesetzt haben sich in der Praxis vor allem Laserdopplermessvorrichtungen. Dabei wird unter Ausnutzung des Dopplereffekts das von einer bewegten Oberfläche zurückgestreute Laserlicht ausgewertet. Beispielsweise können zwei kollimierte Laserstrahlen unter einem bestimmten Winkel auf das Produkt einfallen und auf der Oberfläche des Produkts überlagert werden. Die Überlagerung erzeugt ein Interferenzmuster, wobei es bei einer Bewegung des Produkts zu einer Intensitätsmodulation des durch die Oberfläche zurückgestreuten Laserlichts kommt. Ohne weitere Vorkehrungen können auch mit solchen Messvorrichtungen ein Stillstand oder eine Richtungsänderung des Produkts nicht erkannt werden. Daher ist vorgeschlagen worden, mit sogenannten Bragg-Zellen eine Frequenzverschiebung zwischen den beiden Lasermessstrahlen zu erzeugen. Dadurch bewegt sich das Interferenzmuster über den beleuchteten Oberflächenbereich des Produkts und es wird möglich, die Bewegungsrichtung oder auch einen Stillstand des Produkts zu erkennen. Allerdings sind Bragg-Zellen sehr kostenintensiv. Weiter nachteilig bei Laserdopplervorrichtungen ist, dass die Kalibrierung der Komponenten der Messvorrichtung vom Winkel der beiden Lasermessstrahlen und von der Laserwellenlänge abhängt. Dies macht die Einrichtung der Messvorrichtung aufwendig.

Aus US 2004/0145749 A1 ist eine Vorrichtung zur berührungslosen Erkennung der Bewegungsrichtung eines Objekts bekannt. Die Vorrichtung weist zwei Messeinrichtungen auf, die jeweils zur Auswertung eines Ortsfilterverfahrens ausgebildet sind. Auf das zu vermessende Objekt gerichtete und an dem Objekt reflektierte Laserstrahlung wird mittels eines Strahlteilers in zwei Strahlengänge aufgeteilt, die jeweils auf eine der Messeinrichtungen geleitet werden. Durch Auswertung von durch die Messeinrichtungen aufgenommenen Specklemustern wird die Bewegungsrichtung des Objekts erkannt.

Aus JP H08 146020 A ist ein Verfahren zum Detektieren einer Bewegungsgeschwindigkeit eines bewegten Objekts bekannt, dessen Bewegungsgeschwindigkeit und Bewegungsrichtung sich in einem Produktionsprozess mehrfach ändert. Das Messverfahren erfolgt unter Einsatz eines Dopplerverfahrens in Kombination mit einem Ortsfilterverfahren, wobei für das Ortsfilterverfahren ein eindimensionaler Lichtsensor verwendet wird. Auf diese Weise soll der Messbereich auf unterschiedliche Geschwindigkeiten, insbesondere langsame Geschwindigkeiten, des Objekts ausgedehnt werden.

EP 0 710 817 A1 beschreibt eine Vorrichtung zur Untersuchung einer Straßenoberfläche, bei der Licht auf die Straßenoberfläche projiziert wird und von der Straßenoberfläche gestreutes Licht durch Fotodetektoren und einen Ortsfilter aufgenommen wird. Auf diese Weise soll erkannt werden, ob die Straßenoberfläche mit Schnee, Schotter oder Asphalt bedeckt ist.

US 4 616 931 A beschreibt ein Verfahren und eine Vorrichtung zur berührungsfreien Bestimmung der Bewegung eines Objekts, bei denen ein Bild des bewegten Objekts auf ein Gitter optoelektronischer Wandler projiziert wird. Mit einer zweidimensionalen Matrix von Wandlern werden Messungen durchgeführt, um die Bewegung des Objekts in unterschiedlichen Richtungen zu erkennen.

DE 10 2015 217 022 A1 beschreibt ein Ortsfiltermessverfahren zur Bestimmung einer Relativgeschwindigkeit zwischen einer Ortsfiltermessvorrichtung und einem Objekt. Zur Erzeugung eines Ortsfiltersignals wird ein betrachteter Ausschnitt des Objekts zeitweise oder dauerhaft wenigstens annähernd konstant gehalten.

Aus US 2013/0001401 A1 ist ein weiteres Ortsfiltermessverfahren bekannt, bei dem mit einem Array aus beweglichen Spiegeln phasenverschobene Signale erzeugt werden, deren Differenz gebildet werden kann.

EP 2 241 896 A1 beschreibt ein Regelsystem zur Stabilisierung eines Flugkörpers mit einer optoelektronischen Messvorrichtung, die ein Messsignal über eine Bewegungsgröße des Flugkörpers ausgibt, wobei das Messsignal von Einflüssen von Roll-Drehbewegungen des Flugkörpers bereinigt wird.

Ausgehend von dem erläuterten Stand der Technik liegt der Erfindung daher die Aufgabe zugrunde, eine Vorrichtung der eingangs genannten Art bereitzustellen, mit der eine jederzeit zuverlässige Messung der Geschwindigkeit und/oder Länge des Produkts erreicht wird, wobei in zuverlässiger, konstruktiv einfacher und kostengünstiger Weise auch eine Erkennung einer Richtungsänderung oder eines Stillstands des Produkts möglich ist.

Die Erfindung löst die Aufgabe durch den Gegenstand von Anspruch 1. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass die Detektoreinrichtung einen ersten Sensor mit einem vor dem ersten Sensor angeordneten ersten Transmissionsgitter sowie einen durch einen Bildsensor gebildeten zweiten Sensor umfasst, dass weiterhin ein erster Strahlteiler vorgesehen ist, der von dem Produkt zurückgestreute Laserstrahlung in zu dem ersten Sensor einerseits und zu dem Bildsensor andererseits geleitete Laserstrahlung aufteilt, und dass eine Auswerteeinrichtung vorgesehen ist, die dazu ausgebildet ist, anhand einer bei einer Bewegung des Produkts durch den ersten Sensor detektierten Intensitätsmodulation und anhand einer bei einer Bewegung des Produkts durch den Bildsensor detektierten Verschiebung eines auf dem Bildsensor gebildeten Specklemusters die Geschwindigkeit und/oder die Länge des Produkts zu bestimmen.

Das Produkt kann insbesondere ein Strang sein. Der Strang kann ein rohrförmiger Strang sein. Der Strang wird insbesondere entlang seiner Längsachse durch die Vorrichtung gefördert. Es kann sich bei dem Produkt aber auch beispielsweise um eine Folie, eine Platte oder ein anderweitiges Profil handeln. Zum Fördern des Produkts durch die Vorrichtung kann die Vorrichtung eine entsprechende Fördereinrichtung umfassen. Das Produkt kann zum Beispiel aus Kunststoff oder Metall oder Glas bestehen. Das Produkt kann zum Beispiel aus einer Extrusionsvorrichtung kommen, in der das Produkt durch Extrusion hergestellt wird. Die Vorrichtung kann auch die Extrusionsvorrichtung umfassen.

Bei der erfindungsgemäßen Vorrichtung wird die Oberfläche des Produkts mit einem Laser bestrahlt und Laserstrahlung wird von dem Produkt gestreut. Ein erster Sensor ist vorgesehen und ein erstes Transmissionsgitter ist im Strahlengang der Laserstrahlung vor dem ersten Sensor angeordnet. Von dem Produkt zurückgestreute Strahlung gelangt entsprechend auf das erste Transmissionsgitter. Auf dem ersten Transmissionsgitter entsteht ein Specklemuster. Ein Specklemuster entsteht durch Interferenz ausreichend kohärenter Strahlung, hier der Laserstrahlung, die von Orten unterschiedlicher Höhe auf der Oberfläche des Produkts gestreut wurde und entsprechend einen das Interferenzmuster (Specklemuster) erzeugenden Gangunterschied besitzt. Entsprechend dem auf dem ersten Transmissionsgitter gebildeten Specklemuster gelangt Strahlung durch das erste Transmissionsgitter und wird von dem ersten Sensor detektiert. Eine Bewegung des Produkts in Förderrichtung erzeugt eine entsprechende Bewegung des Specklemusters auf dem Transmissionsgitter. Dies führt zu einer entsprechenden Modulation der von dem ersten Sensor empfangenen Strahlungsintensität. Aus der Frequenz der Intensitätsmodulation kann in an sich bekannter Weise auf die Geschwindigkeit des Produkts und daraus wiederum auf die Länge des Produkts zwischen verschiedenen Messzeitpunkten geschlossen werden. Die Modulationsfrequenz ist dabei insbesondere proportional zur Geschwindigkeit des Produkts. Insbesondere bei kollimierten Laserstrahlen ist sie unbeeinflusst von Bewegungen des Produkts in einer anderen Richtung als der Förderrichtung. Es ist daher bevorzugt möglich, kollimierte Laserstrahlung zu verwenden. Dann sind die zurückgelegten Strecken vom Produkt und Specklemuster auf dem Transmissionsgitter unabhängig von etwaigen Bewegungen des Produkts in einer anderen Richtung als der Förderrichtung identisch. Die Verwendung kollimierter Laserstrahlung ist aber nicht zwingend. Es ist vielmehr auch möglich, nicht oder nur teilweise kollimierte Laserstrahlung zu verwenden.

Als Laser kommt zum Beispiel ein Infrarotlaser in Frage. Bei dem Specklemuster handelt es sich um ein objektives Specklemuster, also ein Specklemuster, das allein durch Ausbreitung von an einer ausreichend rauen Oberfläche gestreuter und sich im Raum ausbreitender Strahlung gebildet wird. Da das Specklemuster erst auf dem ersten Transmissionsgitter entsteht, ist es immer auf diesen fokussiert. Es ist also keine abbildende Optik erforderlich. Insbesondere ist es also möglich, dass bei der erfindungsgemäßen Vorrichtung keine abbildende Optik zwischen dem Produkt und dem ersten Sensor angeordnet ist. Dies macht den Aufbau und die Einrichtung der erfindungsgemäßen Vorrichtung einfach und kostengünstig. Außerdem können somit verschiedene Arbeitsabstände zu dem Produkt realisiert und Schwankungen im Abstand während der Messung oder zwischen unterschiedlichen Messungen toleriert werden. Durch die Nutzung eines Specklemusters besteht auch bei sehr glatten Oberflächen mit einer Rauigkeit in der Größenordnung der Laserwellenlänge ein hoher Kontrast, wodurch eine hohe Signalqualität gewährleistet ist. Auch sehr glatte Oberflächen können zuverlässig vermessen werden. Durch die insbesondere im Vergleich zu bildgebenden Sensoren, wie CCD-Sensoren, wesentlich höhere Bandbreite kann mit dem Ortsfilterverfahren mit dem ersten Sensor in denselben Geschwindigkeitsbereichen gemessen werden wie mit Laserdopplermessvorrichtungen.

Wie eingangs erläutert, sind Ortsfilterverfahren allerdings grundsätzlich problematisch bei sehr langsamen Geschwindigkeiten des Produkts, insbesondere bei einem Stillstand des Produkts. Auch eine Richtungsdetektion mit dem Ortsfilterverfahren ist, wie zuvor erläutert, ohne eine Verminderung der Messgenauigkeit und des Geschwindigkeitsbereiches bisher nicht möglich. Um dennoch in einfacher und kostengünstiger Weise eine Richtungssensitivität und eine Messmöglichkeit bei sehr geringen Fördergeschwindigkeiten bis zum Stillstand zu ermöglichen, kombiniert die erfindungsgemäße Vorrichtung das erläuterte Ortsfilterverfahren mit einer Bilderfassung des durch die Bestrahlung der Produktoberfläche mit Laserlicht erzeugten Specklemusters. Dazu umfasst die Vorrichtung einen zweiten Sensor in Form eines Bildsensors, also eines Sensors, der eine zweidimensional auflösende Sensorfläche besitzt. Auf der Sensorfläche des Bildsensors entsteht ebenfalls das Specklemuster. Durch Einsatz eines Strahlteilers sehen beide Sensoren denselben Bereich der Produktoberfläche bzw. von demselben Bereich der Produktoberfläche gestreute Laserstrahlung. Damit detektieren sie auch dasselbe Specklemuster. Das erste Transmissionsgitter kann dabei zwischen dem ersten Strahlteiler und dem ersten Sensor angeordnet sein. Die Auswerteeinrichtung wertet das Messergebnis des zweiten Sensors (des Bildsensors) nach dem sogenannten Optical Flow Tracking Verfahren aus, das zum Beispiel auch bei optischen Computermäusen zum Einsatz kommt. Dabei wird ausgenutzt, dass sich das auf dem Bildsensor gebildete Specklemuster entsprechend der Förderbewegung des Produkts auf der Sensorfläche verschiebt. Aus dieser Verschiebung des Specklemusters ist einerseits eine Geschwindigkeits- und damit Längenmessung des Produkts auch bei sehr geringen Fördergeschwindigkeiten möglich bis zu einem Stillstand. Andererseits ist auch eine Richtungssensitivität gegeben, wobei insbesondere auch Bewegungen quer zur Förderrichtung gemessen werden können. Da die Datenauswertung auf einer Korrelationsanalyse basiert, kann mit dem Bildsensor eine Messung langsamer Fördergeschwindigkeiten wesentlich effizienter erfolgen als bei einem auf einen sehr weiten Geschwindigkeitsbereich ausgelegten Ortsfiltermesssystem mit einem optischen Gitter.

Die erfindungsgemäße Vorrichtung kombiniert somit eine Ortsfiltermessung mit einer bildgebenden Messung nach dem Optical Flow Tracking Verfahren, wobei beide Sensoren aufgrund der Anordnung mit dem Strahlteiler dasselbe Specklemuster sehen. Auf diese Weise können in zuverlässiger, konstruktiv einfacher sowie kostengünstiger Weise die Geschwindigkeit und die Länge des Produkts in einem großen Geschwindigkeitsbereich bis zum Stillstand bei gleichzeitiger Richtungserkennung gemessen werden. Der erste Sensor kann dabei als Hauptsensor dienen, der die Geschwindigkeit und/oder Länge des Produkts im Regelbetrieb misst, wenn dieser seine Betriebsgeschwindigkeit erreicht hat. Der zweite Sensor (Bildsensor) kann als Hilfssensor eingesetzt werden, wenn geringe Fördergeschwindigkeiten des Produkts vorliegen bis zu einem Stillstand und/oder zur Richtungserkennung. Dabei stellen auch sehr große Beschleunigungswerte kein Problem für eine zuverlässige Messung dar. Weiterhin ist ein besonders geringer Abstand zwischen der Detektoreinrichtung und dem Produkt möglich, beispielsweise von weniger als 10 cm, was insbesondere bei sehr kleinen, insbesondere sehr dünnen, bzw. sehr glatten Produkten eine bessere Auswertung erlaubt. Außerdem sind dann etwaig vorzusehende Schutzgehäuse kompakter ausführbar, wodurch der Aufwand und die Kosten der Vorrichtung weiter gesenkt werden. Staub oder andere Störfaktoren im Strahlengang besitzen einen geringeren Einfluss. Bei den bekannten Laserdopplervorrichtungen ist hierfür teures zusätzliches Schutzzubehör erforderlich. Außerdem bleibt bei der erfindungsgemäßen Vorrichtung der Winkel zwischen dem Laserstrahl und dem Produkt ohne relevanten Einfluss auf das Messergebnis. Dies erlaubt eine einfache Kalibrierung.

Gemäß einer Ausgestaltung kann zwischen dem ersten Transmissionsgitter und dem ersten Sensor eine die dem ersten Sensor zugeleitete Laserstrahlung auf den ersten Sensor fokussierende erste Linse angeordnet sein. Durch die fokussierende Linse ist sichergestellt, dass die gesamte durch das Transmissionsgitter gelangende Strahlung dem ersten Sensor zugeführt wird und damit der Auswertung zur Verfügung steht.

In besonders praxisgemäßer Weise kann der erste Sensor eine Fotodiode sein. Ein entscheidender Vorteil einer Fotodiode gegenüber einem Bildsensor ist die höhere Bandbreite der Fotodiode.. Zum Einsatz kommen können zum Beispiel Silizium-Fotodioden. Sie besitzen eine hohe Empfindlichkeit zum Beispiel für gängige Infrarotlaser.

Nach einer weiteren Ausgestaltung kann zwischen dem ersten Strahlteiler und dem Bildsensor eine die zu dem Bildsensor geleitete Laserstrahlung fokussierende zweite Linse angeordnet sein. Während das Specklemuster im Strahlengang des ersten Sensors wie erläutert auf dem ersten Transmissionsgitter entsteht, entsteht das Specklemuster im Strahlengang des Bildsensors (zweiter Sensor) auf der Sensorfläche. Durch eine fokussierende Linse kann die Laserstrahlung auf eine Messöffnung des Bildsensors fokussiert werden, so dass die gesamte Laserstrahlung ausgewertet werden kann. Die Auswertung der Messsignale kann so weiter verbessert werden. Die fokussierende Linse kann unmittelbar vor dem Bildsensor angeordnet werden und/oder beispielsweise unmittelbar hinter dem ersten Strahlteiler, um mehr Strahlung einzusammeln, zum Beispiel bei größeren Abständen oder kleineren Produkten.

Gemäß einer weiteren besonders praxisgemäßen Ausgestaltung kann der Bildsensor ein CCD-Sensor oder ein CMOS-Sensor sein.

Erfindungsgemäß umfasst die Detektoreinrichtung weiterhin einen dritten Sensor. Zwischen dem ersten Strahlteiler und dem Bildsensor ist ein zweiter Strahlteiler angeordnet, der von dem ersten Strahlteiler kommende Laserstrahlung in zu dem Bildsensor einerseits und zu dem dritten Sensor andererseits geleitete Laserstrahlung aufteilt, oder zwischen dem ersten Strahlteiler und dem ersten Transmissionsgitter ist ein zweiter Strahlteiler angeordnet, der von dem ersten Strahlteiler kommende Laserstrahlung in zu dem ersten Sensor einerseits und zu dem dritten Sensor andererseits geleitete Laserstrahlung aufteilt. Die Auswerteeinrichtung bildet zum Bestimmen der Geschwindigkeit und/oder der Länge des Produkts die Differenz aus den Messsignalen des ersten Sensors und des dritten Sensors. Das vom ersten Sensor empfangenen Messsignal enthält einen sogenannten Gleichanteil als Offset. Dieser Gleichanteil wird eliminiert indem die Messsignale des dritten Sensors von den Messsignalen des ersten Sensors abgezogen werden. Das so erhaltene Differenzsignal enthält keinen Gleichanteil mehr, wodurch das Signal-Rausch-Verhältnis und damit die Detektierbarkeit der Signale erheblich verbessert werden. Vibriert z.B. das Produkt oder hat es eine periodische Oberflächenstruktur können periodische Intensitätsschwankungen auftreten, die wiederum zu Störfrequenzen im Signal führen. Ohne weiteres sind solche Störfrequenzen von der eigentlichen Modulationsfrequenz des Nutzsignals nicht immer unterscheidbar. Bei der hier beschriebenen Ausgestaltung enthält nur das Signal des ersten Sensors das Nutzsignal, so dass Frequenzen, die sowohl im ersten als auch im dritten Sensor erkannt werden, eindeutig als Störungen identifizierbar sind. Dadurch wird die Auswertung des Messsignals weiter verbessert.

Nach einer weiteren Ausgestaltung kann vor dem dritten Sensor ein zweites Transmissionsgitter angeordnet sein, wobei das zweite Transmissionsgitter gegenüber dem ersten Transmissionsgitter um 180° phasenverschoben ist. Durch diese Ausgestaltung wird nicht nur der Gleichanteil eliminiert, sondern es erfolgt aufgrund der Phasenverschiebung der Transmissionsgitter um 180° darüber hinaus eine maximale Verstärkung des Intensitätsmodulationssignals, insbesondere der entsprechenden Signalschwingung. Allerdings erfordert dies eine exakte Positionierung der beiden Transmissionsgitter, was je nach Anwendungsfall zu aufwendig sein kann. Entsprechend ist es auch möglich, dass vor dem dritten Sensor kein Transmissionsgitter angeordnet ist. Das Problem der exakten Positionierung wird dadurch vermieden. Es erfolgt dann zwar keine Verstärkung des Schwingungssignals, allerdings dennoch ein Eliminieren des Gleichanteils. Je nach Anwendungsfall kann diese Lösung entsprechend ausreichend bzw. bevorzugt sein.

Auch der dritte Sensor kann eine Fotodiode sein. Wiederum kann es sich zum Beispiel um eine Silizium-Fotodiode handeln, die eine besonders hohe Empfindlichkeit für gängige Infrarotlaser besitzt.

Nach einer weiteren Ausgestaltung kann die Auswerteeinrichtung dazu ausgebildet sein, eine Verschiebung des durch den Bildsensor detektierten Specklemusters in einer Richtung quer zur Förderrichtung des Produkts zu bestimmen. Weiterhin kann eine Verstelleinrichtung zum Verstellen des Auftrefforts der Laserstrahlung auf dem Produkt zumindest in einer Richtung quer zur Förderrichtung des Produkts vorgesehen sein, und die Auswerteeinrichtung kann dazu ausgebildet sein, die Verstelleinrichtung aufgrund einer bestimmten Verschiebung des durch den Bildsensor detektierten Specklemusters in einer Richtung quer zur Förderrichtung des Produkts zum Verstellen des Auftrefforts der Laserstrahlung auf dem Produkt zumindest in einer Richtung quer zur Förderrichtung des Produkts anzusteuern. Bei Messvorrichtungen im Stand der Technik besteht insbesondere bei dünnen Produkten, wie dünnen Strangprodukten, das Problem, dass eine gegebenenfalls nicht detektierte seitliche Verschiebung des Produkts zu einer mangelhaften Bestrahlung bzw. Messung des Produkts durch die Laserstrahlung führt. Die seitliche Toleranz, also quer zur Förderrichtung des Produkts, beträgt dabei typischerweise nur wenige Millimeter entsprechend der Größe des Laserflecks auf der Oberfläche. Da die erfindungsgemäße Vorrichtung mit dem Bildsensor auch Querbewegungen des Produkts, also quer zur Förderrichtung, erkennt, kann dies für ein seitliches Verstellen des Lasers durch die Auswerteeinrichtung genutzt werden. Die Verstelleinrichtung kann beispielsweise einen Spiegel mit Galvanometerantrieb o. ä. umfassen. Durch Ansteuerung der Verstelleinrichtung mittels der Auswerteeinrichtung kann die Richtung des Lasers in Querrichtung zur Förderrichtung so geregelt werden, dass das Produkt stets optimal beleuchtet und vermessen werden kann. Hierdurch können wesentlich größere Toleranzen quer zur Förderrichtung realisiert werden als im Stand der Technik, beispielsweise in einer Größenordnung von bis zu 100 mm für eine Realisierung mit etwa 25 mm großen Optiken bei Arbeitsabständen bis zu 500 mm.

Gemäß einer weiteren Ausgestaltung kann weiterhin eine Abstandseinstelleinrichtung vorgesehen sein, durch die der Abstand des Lasers und/oder der Detektoreinrichtung zu der Oberfläche des Produkts einstellbar ist. Auch die Abstandseinstelleinrichtung kann durch die Auswerteeinrichtung angesteuert werden. Eine solche Abstandseinstellung ist vorteilhaft, da auf diese Weise die Vorrichtung, insbesondere die Detektoreinrichtung, und gegebenenfalls auch der Laser, näher an das Produkt verstellt werden können. Wie oben bereits erläutert, bietet ein geringer Abstand zu dem Produkt diverse Vorteile, insbesondere in Hinblick auf besonders dünne und glatte Produkte, insbesondere Strangprodukte, sowie auch in Bezug auf Schutzmaßnahmen gegenüber und Einfluss von Störpartikeln. Die erfindungsgemäße Vorrichtung kann auch eine Einrichtung zum Verkippen des Lasers umfassen, so dass der durch den Laser beleuchtete Fleck auf der Oberfläche des Produkts auch bei unterschiedlichen Abständen zwischen Laser und Produktoberfläche immer beispielsweise senkrecht unterhalb der Detektoreinrichtung gehalten werden kann.

Gemäß einer weiteren Ausgestaltung kann weiterhin ein Laserstrahlteiler vorgesehen sein, der von dem Laser ausgesandte Laserstrahlung senkrecht auf die Oberfläche des Produkts leitet. Die Laserstrahlung kann durch den Laserstrahlteiler direkt in den Strahlengang der Detektoreinrichtung, insbesondere des ersten und zweiten Sensors eingekoppelt werden. Insbesondere kann dabei senkrecht von der Produktoberfläche zurückgestreute Laserstrahlung mittig auf den ersten Strahlteiler und gegebenenfalls auf den ersten und/oder zweiten Sensor auftreffen. Bei dieser Ausgestaltung muss der Laser für einen anderen Arbeitsabstand nicht in seinem Anstellwinkel verstellt werden. Dadurch sind nochmal größere Schärfentiefen möglich, da der Laserfleck bei einem Hin-und-Her-Wandern des Produkts nicht nach links oder rechts wandert.

Ausführungsbeispiele der Erfindung werden nachfolgend anhand von Zeichnungen näher erläutert. Es zeigen schematisch:
- Figur 1: eine Vorrichtung nach einem ersten Beispiel,
- Figur 2: eine erfindungsgemäße Vorrichtung nach einem Ausführungsbeispiel,
- Figur 3: eine Veranschaulichung der Einstellbarkeit des Lasers,
- Figur 4: drei Teilansichten zur Veranschaulichung einer Verstelleinrichtung zum Verstellen des Auftrefforts der Laserstrahlung, und
- Figur 5: eine Vorrichtung nach einem weiteren Beispiel.

Soweit nichts anderes angegeben ist, bezeichnen in den Figuren gleiche Bezugszeichen gleiche Gegenstände.

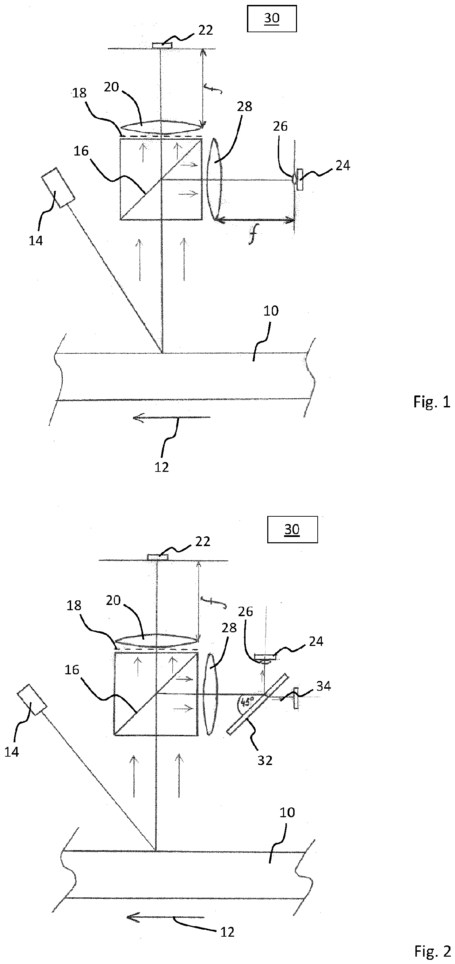

In Figur 1 ist ein rohrförmiger Strang 10 ausschnittsweise dargestellt, der mittels einer nicht näher dargestellten Fördereinrichtung entlang einer Förderrichtung gefördert wird, wie durch den Pfeil 12 veranschaulicht. Die Förderrichtung verläuft in Richtung der Längsachse des Strangs 10. Mittels eines Lasers 14 wird Laserstrahlung auf die Oberfläche des Strangs 10 geleitet. Von der Oberfläche gestreute Laserstrahlung wird mittels eines ersten Strahlteilers 16 in zwei Strahlungsanteile aufgeteilt. Ein erster Strahlungsanteil trifft auf ein erstes Transmissionsgitter 18. Durch das erste Transmissionsgitter 18 gelangende Laserstrahlung wird durch eine erste Linse 20 auf einen ersten Sensor 22 fokussiert, bei dem es sich beispielsweise um eine Fotodiode handeln kann. Ein zweiter Strahlungsanteil gelangt zu einem zweiten Sensor 24, bei dem es sich um einen Bildsensor handelt, beispielsweise einen CCD-Sensor oder CMOS-Sensor. Dem Bildsensor 24 unmittelbar vorgeordnet kann eine fokussierende zweite Linse 26 vorgesehen sein. Alternativ oder zusätzlich kann dem ersten Strahlteiler 16 auch unmittelbar nachgeordnet eine fokussierende zweite Linse 28 angeordnet sein. Durch die zweite Linse 26 und/oder 28 wird die von dem ersten Strahlungsteiler 16 kommende Strahlung auf eine Messöffnung des Bildsensors 24 fokussiert.

Durch die Verwendung kohärenten Laserlichts entsteht auf dem ersten Transmissionsgitter 18 einerseits und auf der Sensorfläche des Bildsensors 24 andererseits ein Specklemuster. Dieses Specklemuster ist charakterisiert durch die Oberflächenstruktur des Strangs 10 und bewegt sich entsprechend mit dem Strang 10. Dadurch detektiert der erste Sensor 22 eine Intensitätsmodulation mit einer für die Bewegung des Strangs 10 charakteristischen Modulationsfrequenz. Andererseits verschiebt sich das Specklemuster auf der Sensorfläche des Bildsensors 24 und der Bildsensor 24 detektiert diese Verschiebung. Die Messsignale des ersten Sensors 22 und des Bildsensors 24 werden einer Auswerteeinrichtung 30 zugeführt. Die Auswerteeinrichtung 30 bestimmt anhand der durch den ersten Sensor 22 detektierten Intensitätsmodulation und/oder anhand der durch den Bildsensor 24 detektierten Verschiebung des Specklemusters die Geschwindigkeit und/oder die Länge des Strangs zwischen unterschiedlichen Messzeitpunkten.

Die erfindungsgemäße Vorrichtung in Figur 2 entspricht weitgehend der Vorrichtung aus Figur 1. Im Unterschied zu der Vorrichtung aus Figur 1 ist bei der Vorrichtung in Figur 2 zwischen dem ersten Strahlteiler 16 und dem Bildsensor 24 ein zweiter Strahlteiler 32 angeordnet, der von dem ersten Strahlteiler 16 kommende Laserstrahlung in zu dem Bildsensor 24 einerseits und zu einem dritten Sensor 34 andererseits geleitete Laserstrahlung aufteilt. Der dritte Sensor 34 kann ebenfalls durch eine Fotodiode gebildet sein. Neben den Messsignalen des ersten Sensors 22 und des Bildsensors 24 werden bei dem Ausführungsbeispiel nach Figur 2 auch die Messsignale des dritten Sensors 34 an die Auswerteeinrichtung 30 geleitet. Die Auswerteeinrichtung 30 bildet eine Differenz zwischen den Messwerten des ersten Sensors 22 und des dritten Sensors 34, um einen Gleichanteil in dem Messsignal zu eliminieren. Dadurch wird das Signal-Rausch-Verhältnis verbessert und die Messgenauigkeit erhöht. Es ist möglich, vor dem dritten Sensor 34, insbesondere zwischen dem zweiten Strahlteiler 32 und dem dritten Sensor 34 ein zweites Transmissionsgitter anzuordnen, das gegenüber dem ersten Transmissionsgitter 18 um 180° phasenverschoben ist. Dies führt bei einer Differenzbildung zwischen den Sensorsignalen des ersten und dritten Sensors 22, 34 zusätzlich zu einer maximalen Verstärkung des gemessenen Modulationssignals.

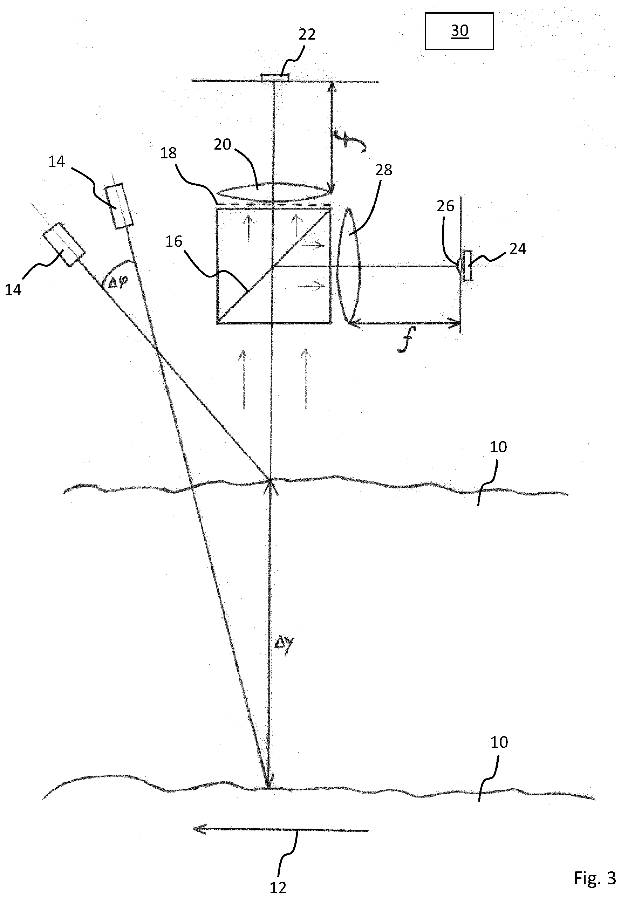

In Figur 3 ist am Beispiel der in Figur 1 gezeigten Vorrichtung dargestellt, wie durch ein Verkippen des Lasers 14 eine Einstellbarkeit auf unterschiedliche Abstände zwischen der Oberfläche des Strangs 10 und der Vorrichtung, insbesondere der Sensoren 22, 24 bzw. dem Strahlteiler 16 gewährleistet werden kann. Dabei sind zwei unterschiedlich zu der Vorrichtung beabstandete Strangoberflächen und entsprechend zwei unterschiedliche Positionen des Lasers 14 dargestellt. Durch das Verkippen des Lasers 14 ist sichergestellt, dass die Laserstrahlung immer mittig senkrecht unterhalb des Strahlteilers 16 auf die Strangoberfläche auftrifft. Selbstverständlich gilt dies in gleicher Weise für das in Figur 2 gezeigte Ausführungsbeispiel. Aufgrund des Verzichts auf eine abbildende Optik zwischen dem Strang 10 und den Sensoren 22, 24 und gegebenenfalls 34 bei den dargestellten erfindungsgemäßen Vorrichtungen und aufgrund der Tatsache, dass das auf dem ersten Transmissionsgitter 18 bzw. dem Bildsensor 24 entstehende Specklemuster immer scharf ist, sind bei einem Verkippen des Lasers 14 in besonders einfacher Weise keine zusätzlichen Kalibriermaßnahmen erforderlich.

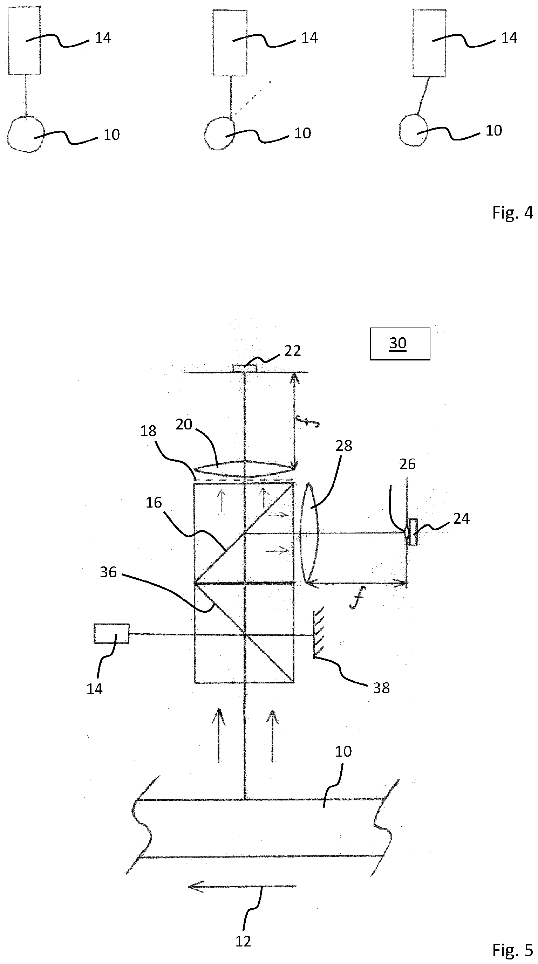

In Figur 4 ist sehr schematisch eine in den Laser 14 integrierte Verstelleinrichtung zum Verstellen des Auftrefforts der Laserstrahlung auf dem Strang 10 in einer Richtung quer zur Förderrichtung des Strangs 10 dargestellt. Diese kann bei dem Ausführungsbeispiel nach Figur 2 und jedem der gezeigten Beispiele zum Einsatz kommen. In Figur 4 sind drei unterschiedliche Teilansichten gezeigt, die unterschiedliche Zustände darstellen. In allen drei Teilansichten der Figur 4 verläuft die Förderrichtung des Strangs 10 senkrecht in die Zeichenebene hinein. In der linken Teilansicht der Figur 4 ist ein Zustand gezeigt, bei der Laserstrahlung aus dem Laser 14 senkrecht nach unten mittig auf die Oberfläche des Strangs 10 trifft. Dieses mittige Auftreffen stellt den gewünschten Zustand dar. In der mittleren Teilansicht der Figur 4 ist ein Zustand gezeigt, bei dem sich der Strang 10 quer zur Förderrichtung bewegt hat, in der Teilansicht etwas nach links. Dadurch befindet sich der Auftreffort der Laserstrahlung, die weiterhin senkrecht nach unten aus dem Laser 14 austritt, nicht mehr mittig auf der Strangoberfläche. Dies führt zu einer nicht-optimalen Beleuchtung der Strangoberfläche und kann bei entsprechend starker seitlicher Verschiebung des Strangs 10 sogar dazu führen, dass der Strang 10 vollständig aus dem Bereich der Laserstrahlung heraustritt. Die seitliche Verschiebung des Strangs 10 kann anhand einer Auswertung des Messsignals des Bildsensors 24 erkannt werden, insbesondere durch ein entsprechendes Verschieben des Specklemusters auf der Sensorfläche des Bildsensors 24, ausgewertet durch die Auswerteeinrichtung 30. Die Auswerteeinrichtung 30 kann dann die Verstelleinrichtung ansteuern, um den Auftreffort der Laserstrahlung auf der Strangoberfläche so anzupassen, dass dieser wieder mittig auf dem Strang 10 ist, wie in der rechten Teilansicht von Figur 4 dargestellt. Die Verstelleinrichtung kann zum Beispiel in besonders einfacher Weise einen verstellbaren, die Laserstrahlung auf die Strangoberfläche leitenden Spiegel umfassen. Der Spiegel kann zum Beispiel mittels eines Galvanometerantriebs verstellt werden.

In Figur 5 ist ein weiteres Beispiel einer Vorrichtung gezeigt, das weitgehend dem Beispiel nach Figur 1 entspricht. Zusätzlich ist hier ein Laserstrahlteiler 36 vorgesehen, der von dem Laser 14 ausgesandte Laserstrahlung senkrecht auf die Oberfläche des Strangs 10 leitet. Die Laserstrahlung wird dabei durch den Laserstrahlteiler 36 direkt in den Strahlengang der Detektoreinrichtung, insbesondere des ersten und zweiten Sensors (22, 24) eingekoppelt. Insbesondere trifft senkrecht von der Strangoberfläche zurückgestreute Laserstrahlung mittig auf den ersten Strahlteiler 16 und auf den ersten und zweiten Sensor 24, 26 auf. Auch durchläuft senkrecht von der Strangoberfläche zurückgestreute Laserstrahlung die erste und zweite Linse 20, 28 mittig. Auf der dem Laser 14 gegenüberliegenden Seite des Laserstrahlteilers 36 ist eine Strahlfalle 38 angeordnet, um zu verhindern, dass Laserstrahlung durch den Laserstrahlteiler 36 direkt auf die Sensoren 24, 26 gelangen kann. Der Anteil der Laserstrahlung, der von dem Laserstrahlteiler 36 direkt durchgelassen wird, wird von der Strahlfalle 38 absorbiert. Natürlich könnte die Ausgestaltung nach Figur 5 auch beispielsweise mit dem Ausführungsbeispiel nach Figur 2 kombiniert werden.

### Bezugszeichenliste

- 10: Strang
- 12: Förderrichtung
- 14: Laser
- 16: Erster Strahlteiler
- 18: Erstes Transmissionsgitter
- 20: Erste Linse
- 22: Erster Sensor
- 24: Zweiter Sensor (Bildsensor)
- 26: Zweite Linse
- 28: Zweite Linse
- 30: Auswerteeinrichtung
- 32: Zweiter Strahlteiler
- 34: Dritter Sensor
- 36: Laserstrahlteiler
- 38: Strahlfalle

## Patentansprüche

1. Vorrichtung zum Bestimmen der Geschwindigkeit und/oder der Länge eines entlang einer Förderrichtung (12) bewegten Produkts (10), vorzugsweise eines Strangs (10) umfassend einen Laser (14) zum Bestrahlen einer Oberfläche des Produkts (10) und umfassend eine Detektoreinrichtung zum Detektieren von von der Oberfläche des Produkts (10) zurückgestreuter Laserstrahlung, wobei die Detektoreinrichtung einen ersten Sensor (22) mit einem vor dem ersten Sensor (22) angeordneten ersten Transmissionsgitter (18) sowie einen durch einen Bildsensor (24) gebildeten zweiten Sensor (24) umfasst, wobei weiterhin ein erster Strahlteiler (16) vorgesehen ist, der von dem Produkt (10) zurückgestreute Laserstrahlung in zu dem ersten Sensor (22) einerseits und zu dem Bildsensor (24) andererseits geleitete Laserstrahlung aufteilt, **dadurch gekennzeichnet, dass** eine Auswerteeinrichtung (30) vorgesehen ist, die dazu ausgebildet ist, anhand einer bei einer Bewegung des Produkts (10) durch den ersten Sensor (22) detektierten Intensitätsmodulation und anhand einer bei einer Bewegung des Produkts (10) durch den Bildsensor (24) detektierten Verschiebung eines auf dem Bildsensor (24) gebildeten Specklemusters die Geschwindigkeit und/oder die Länge des Produkts (10) zu bestimmen, dass die Detektoreinrichtung weiterhin einen dritten Sensor (34) umfasst, und dass zwischen dem ersten Strahlteiler (16) und dem Bildsensor (24) ein zweiter Strahlteiler (32) angeordnet ist, der so ausgebildet ist, dass er von dem ersten Strahlteiler (16) kommende Laserstrahlung in zu dem Bildsensor (24) einerseits und zu dem dritten Sensor (34) andererseits geleitete Laserstrahlung aufteilt oder dass zwischen dem ersten Strahlteiler (16) und dem ersten Transmissionsgitter (18) ein zweiter Strahlteiler (32) angeordnet ist, der so ausgebildet ist, dass er von dem ersten Strahlteiler (16) kommende Laserstrahlung in zu dem ersten Sensor (22) einerseits und zu dem dritten Sensor (34) andererseits geleitete Laserstrahlung aufteilt, und dass die Auswerteeinrichtung (30) dazu ausgebildet ist, zum Bestimmen der Geschwindigkeit und/oder der Länge des Produkts (10) die Differenz aus den Messsignalen des ersten Sensors (22) und des dritten Sensors (34) zu bilden, so dass ein Gleichanteil des von dem ersten Sensor (22) empfangenen Messsignals eliminiert ist.

2. Vorrichtung nach Anspruch 1, **dadurch gekennzeichnet, dass** zwischen dem ersten Transmissionsgitter (18) und dem ersten Sensor (22) eine die dem ersten Sensor (22) zugeleitete Laserstrahlung auf den ersten Sensor (22) fokussierende erste Linse (20) angeordnet ist.

3. Vorrichtung nach einem der vorhergehenden Ansprüche, **dadurch gekennzeichnet, dass** der erste Sensor (22) eine Fotodiode ist.

4. Vorrichtung nach einem der vorhergehenden Ansprüche, **dadurch gekennzeichnet, dass** zwischen dem ersten Strahlteiler (16) und dem Bildsensor (24) eine die zu dem Bildsensor (24) geleitete Laserstrahlung fokussierende zweite Linse (26, 28) angeordnet ist.

5. Vorrichtung nach einem der vorhergehenden Ansprüche, **dadurch gekennzeichnet, dass** der Bildsensor (24) ein CCD-Sensor oder ein CMOS-Sensor ist.

6. Vorrichtung nach einem der vorhergehenden Ansprüche, **dadurch gekennzeichnet, dass** vor dem dritten Sensor (34) ein zweites Transmissionsgitter angeordnet ist, wobei das zweite Transmissionsgitter gegenüber dem ersten Transmissionsgitter (18) um 180° phasenverschoben ist.

7. Vorrichtung nach einem der vorhergehenden Ansprüche, **dadurch gekennzeichnet, dass** der dritte Sensor (34) eine Fotodiode ist.

8. Vorrichtung nach einem der vorhergehenden Ansprüche, **dadurch gekennzeichnet, dass** die Auswerteeinrichtung (30) dazu ausgebildet ist, eine Verschiebung des durch den Bildsensor (24) detektierten Specklemusters in einer Richtung quer zur Förderrichtung (12) des Produkts (10) zu bestimmen.

9. Vorrichtung nach Anspruch 8, **dadurch gekennzeichnet, dass** weiterhin eine Verstelleinrichtung zum Verstellen des Auftrefforts der Laserstrahlung auf dem Produkt (10) zumindest in einer Richtung quer zur Förderrichtung (12) des Produkts (10) vorgesehen ist, und dass die Auswerteeinrichtung (30) dazu ausgebildet ist, die Verstelleinrichtung aufgrund einer bestimmten Verschiebung des durch den Bildsensor (24) detektierten Specklemusters in einer Richtung quer zur Förderrichtung (12) des Produkts (10) zum Verstellen des Auftrefforts der Laserstrahlung auf dem Produkt (10) zumindest in einer Richtung quer zur Förderrichtung (12) des Produkts (10) anzusteuern.

10. Vorrichtung nach einem der vorhergehenden Ansprüche, **dadurch gekennzeichnet, dass** weiterhin eine Abstandseinstelleinrichtung vorgesehen ist, durch die der Abstand des Lasers (14) und/oder der Detektoreinrichtung zu der Oberfläche des Produkts (10) einstellbar ist.

11. Vorrichtung nach einem der vorhergehenden Ansprüche, **dadurch gekennzeichnet, dass** weiterhin ein Laserstrahlteiler (36) vorgesehen ist, der von dem Laser (14) ausgesandte Laserstrahlung senkrecht auf die Oberfläche des Produkts (10) leitet.

## Claims

1. A device for determining the speed and/or the length of a product (10), preferably a strand (10), moving along a conveying direction (12), comprising a laser (14) for irradiating a surface of the product (10) and comprising a detector apparatus for detecting laser radiation backscattered from the surface of the product (10), wherein the detector apparatus comprises a first sensor (22) with a first transmission grid (18) arranged in front of the first sensor (22) and a second sensor (24) formed by an image sensor (24), wherein a first beam splitter (16) is also provided which splits laser radiation backscattered from the product (10) into laser radiation conducted to the first sensor (22), on the one hand, and to the image sensor (24), on the other hand, **characterized in that** an evaluation apparatus (30) is provided which is designed to determine the speed and/or the length of the product (10) based on an intensity modulation detected by the first sensor (22) during a movement of the product (10) and based on a shift of a speckle pattern formed on the image sensor (24) detected by the image sensor (24) during a movement of the product (10), that the detector apparatus also comprises a third sensor (34), and that a second beam splitter (32) is arranged between the first beam splitter (16) and the image sensor (24) and is designed so that it splits laser radiation coming from the first beam splitter (16) into laser radiation conducted to the image sensor (24), on the one hand, and to the third sensor (34), on the other hand, or that a second beam splitter (32) is arranged between the first beam splitter (16) and the first transmission grid (18) and is designed so that it splits laser radiation coming from the first beam splitter (16) into laser radiation conducted to the first sensor (22), on the one hand, and to the third sensor (34), on the other hand, and that the evaluation apparatus (30) is designed to calculate the difference of the measurement signals from the first sensor (22) and from the third sensor (34) in order to determine the speed and/or the length of the product (10) so that a direct component of the measurement signal received by the first sensor (22) is eliminated.

2. The device according to claim 1, **characterized in that** a first lens (20) focusing the laser radiation supplied to the first sensor (22) onto the first sensor (22) is arranged between the first transmission grid (18) and the first sensor (22).

3. The device according to one of the preceding claims, **characterized in that** the first sensor (22) is a photodiode.

4. The device according to one of the preceding claims, **characterized in that** a second lens (26, 28) focusing the laser radiation conducted to the image sensor (24) is arranged between the first beam splitter (16) and the image sensor (24).

5. The device according to one of the preceding claims, **characterized in that** the image sensor (24) is a CCD sensor or a CMOS sensor.

6. The device according to one of preceding claims, **characterized in that** a second transmission grid is arranged in front of the third sensor (34), wherein the second transmission grid is phase-shifted by 180° compared to the first transmission grid (18).

7. The device according to one of the preceding claims, **characterized in that** the third sensor (34) is a photodiode.

8. The device according to one of the preceding claims, **characterized in that** the evaluation apparatus (30) is designed to determine a shift of the speckle pattern detected by the image sensor (24) in a direction transverse to the conveying direction (12) of the product (10).

9. The device according to claim 8, **characterized in that** an adjusting apparatus for adjusting the point of incidence of the laser radiation on the product (10) at least in a direction transverse to the conveying direction (12) of the product (10) is also provided, and that the evaluation apparatus (30) is designed to control the adjusting apparatus on the basis of a determined shift of the speckle pattern detected by the image sensor (24) in a direction transverse to the conveying direction (12) of the product (10) in order to adjust the point of incidence of the laser radiation on the product (10) at least in a direction transverse to the conveying direction (12) of the product (10).

10. The device according to one of the preceding claims, **characterized in that** a distance setting apparatus is also provided, with which the distance of the laser (14) and/or the detector apparatus from the surface of the product (10) can be set.

11. The device according to one of the preceding claims, **characterized in that** a laser beam splitter (36) is also provided which conducts laser radiation emitted by the laser (14) vertically onto the surface of the product (10).

## Revendications

1. Dispositif de détermination de la vitesse et/ou de la longueur d'un produit (10) déplacé le long d'un dispositif de transport (12), de préférence d'un cordon (10) comportant un laser (14) destiné à irradier une surface du produit (10) et comportant un moyen de détection destiné à détecter un faisceau laser rétrodiffusé par la surface du produit (10), dans lequel le moyen de détection comporte un premier capteur (22) doté d'une première grille de transmission (18) disposée en amont du premier capteur (22) ainsi qu'un deuxième capteur (24) formé par un capteur d'image (24), dans lequel il est également prévu un premier diviseur de faisceau (16), lequel divise un faisceau laser rétrodiffusé par le produit (10) en un faisceau laser guidé d'une part vers le premier capteur (22) et d'autre part vers le capteur d'image (24), **caractérisé en ce qu'**il est prévu un moyen d'évaluation (30) conçu pour déterminer la vitesse et/ou la longueur du produit (10), à l'aide d'une modulation d'intensité détectée lors d'un déplacement du produit (10) à travers le premier capteur (22) et à l'aide d'un décalage d'un motif de tavelures formé sur le capteur d'image (24), détecté lors d'un déplacement du produit (10) à travers le capteur d'image (24), **en ce que** le moyen de détection comporte en outre un troisième capteur (34), et **en ce qu'**un deuxième diviseur de faisceau (32) est disposé entre le premier diviseur de faisceau (16) et le capteur d'image (24), lequel est conçu de manière à diviser un faisceau laser provenant du premier diviseur de faisceau (16) en un faisceau laser guidé d'une part vers le capteur d'image (24) et d'autre part vers le troisième capteur (34) ou **en ce qu'**un deuxième diviseur de faisceau (32) est disposé entre le premier diviseur de faisceau (16) et la première grille de transmission (18), lequel est conçu de manière à diviser un faisceau laser provenant du premier diviseur de faisceau (16) en un faisceau laser guidé d'une part vers le premier capteur (22) et d'autre part vers le troisième capteur (34), et **en ce que** le moyen d'évaluation (30) est conçu pour calculer la différence entre les signaux de mesure du premier capteur (22) et du troisième capteur (34) pour la détermination de la vitesse et/ou de la longueur du produit (10), de manière à éliminer une composante continue du signal de mesure reçu par le premier capteur (22).

2. Dispositif selon la revendication 1, **caractérisé en ce qu'**une première lentille (20) focalisant le faisceau laser transmis au premier capteur (22) sur le premier capteur (22) est disposée entre la première grille de transmission (18) et le premier capteur (22).

3. Dispositif selon l'une des revendications précédentes, **caractérisé en ce que** le premier capteur (22) est une photodiode.

4. Dispositif selon l'une des revendications précédentes, **caractérisé en ce qu'**une deuxième lentille (26, 28) focalisant le faisceau laser guidé vers le capteur d'image (24) est disposée entre le premier diviseur de faisceau (16) et le capteur d'image (24).

5. Dispositif selon l'une des revendications précédentes, **caractérisé en ce que** le capteur d'image (24) est un capteur CCD ou un capteur CMOS.

6. Dispositif selon l'une des revendications précédentes, **caractérisé en ce qu'**une deuxième grille de transmission est disposée en amont du troisième capteur (34), dans lequel la deuxième grille de transmission est décalée en phase de 180° par rapport à la première grille de transmission (18).

7. Dispositif selon l'une des revendications précédentes, **caractérisé en ce que** le troisième capteur (34) est une photodiode.

8. Dispositif selon l'une des revendications précédentes, **caractérisé en ce que** le moyen d'évaluation (30) est conçu pour déterminer un décalage du motif de tavelures détecté par le capteur d'image (24) dans la direction transversale au dispositif de transport (12) du produit (10).

9. Dispositif selon la revendication 8, **caractérisé en ce qu'**il est également prévu un moyen de réglage destiné à régler le lieu d'impact du faisceau laser sur le produit (10) au moins dans une direction transversale à la dispositif de transport (12) du produit (10), et **en ce que** le moyen d'évaluation (30) est conçu pour actionner le moyen de réglage en fonction d'un décalage déterminé du motif de tavelures détecté par le capteur d'image (24) dans une direction transversale à la dispositif de transport (12) du produit (10) pour le réglage du lieu d'impact du faisceau laser sur le produit (10) au moins dans une direction transversale à la dispositif de transport (12) du produit (10).

10. Dispositif selon l'une des revendications précédentes, **caractérisé en ce qu'**il est également prévu un moyen d'ajustement de la distance, permettant d'ajuster la distance entre le laser (14) et/ou le moyen de détection et la surface du produit (10).

11. Dispositif selon l'une des revendications précédentes, **caractérisé en ce qu'**il est également prévu un diviseur de faisceau laser (36), lequel guide un faisceau laser émis par le laser (14) perpendiculairement vers la surface du produit (10).
